(19) Europäisches Patentamt
European Patent Office
Office européen des brevets

(11) **EP 4 009 000 A1**

(12) **EUROPEAN PATENT APPLICATION**

(43) Date of publication:
**08.06.2022 Bulletin 2022/23**

(21) Application number: **20211814.7**

(22) Date of filing: **04.12.2020**

(51) International Patent Classification (IPC):
**G01C 21/16** (2006.01)     **G01C 21/20** (2006.01)
**G06T 7/20** (2017.01)

(52) Cooperative Patent Classification (CPC):
**G01C 21/165; G01C 21/206; G06T 7/254**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Cossi, Stefano**
**2068 Hauterive (CH)**

(72) Inventor: **Cossi, Stefano**
**2068 Hauterive (CH)**

(74) Representative: **P&TS SA (AG, Ltd.)**
**Avenue J.-J. Rousseau 4**
**P.O. Box 2848**
**2001 Neuchâtel (CH)**

(54) **DEVICE AND METHOD FOR INDOOR POSITIONING OF A MOVING OBJECT**

(57)     Device (1) for indoor positioning of a moving object (2, 2'), as a shopping cart (2) or a shopping basket (2'), comprising:
- a fixing module, so as to be fixed to the moving object (2, 2'),
- an electronic module (11) comprising:
- an optical flow sensor (10), arranged to take image frames and to compute a distance moved between two image frames taken at two different times,
- an inertial measurement unit (20), arranged to take inertial measurements and to compute a bearing angle (θ) on the basis of said inertial measurements,
- a processing unit (30), arranged to compute coordinates of the moving object on the basis of said distance and of said bearing angle (θ).

This device (1) does not require the installation of any receiver on the indoor environment, nor any satellite either.

Fig. 3

**EP 4 009 000 A1**

## Description

### Technical domain

The present invention concerns a device and method for indoor positioning of a moving object, for example and in a non-limiting way a shopping cart or a shopping basket. Although a preferable application of the present device respectively method is the indoor positioning of a moving object, the present device respectively method could be used, in complement or in alternative, for outdoor positioning of the moving object.

### Related art

In the context of the present invention, the expression "moving object" indicates an object that moves, autonomously or (preferably) by a user. In a preferred embodiment, the moving object is then a user's movable object, i.e. it is moved by a user. In a preferred embodiment, the moving object is a portable object, i.e. it can be carried or handheld by a user. Non-limitative examples of moving objects comprise a cart, a shopping cart, a basket, a shopping basket, a bag, a trolley, a baggage cart, a suitcase, a skateboard, a skate, a scooter, a pushchair, a wheelchair, etc.

Nowadays, the positioning and the tracking of moving (portable) objects as shopping carts is useful in order to assess the behaviour of the customers within a (shopping) building and to study how to improve the customer's shopping experience. For example, the tracking of shopping carts allows to understand how much time the customers spend in certain positions of the store, which are the most congested areas and the less congested ones at specific hours of the day, the week, etc..., and also to extract behavioural patterns, e.g. to improve sales.

There are different technologies that allow the positioning and the tracking of shopping carts. They are based on GPS, or Bluetooth, or UWB (Ultra Wide Band), or RFID, or WiFi or sophisticated CCTV (Closed-Circuit TeleVision) camera systems.

In general, those technologies require the installation of a tag in the shopping cart together with the installation of specific receivers in various places of the supermarket, like the roof. The tag continuously emits signals and the receivers interpret and process them in order to discern the tag's current position.

Those technologies however present some drawbacks, some of them are listed here below.

The GPS technology doesn't work indoor. It requires that the tag moves in an open air place, and therefore it doesn't work in an indoor environment as a supermarket. Additionally, the precision of the GPS is no more accurate than 5 meters, and this cannot be accepted in an indoor environment as a supermarket, where the shelves are in general much less distant between each other.

The Bluetooth technology requires the installation of several receivers on the roofs of the indoor environment. The more receivers are installed, the more accurate is the calculation of the tag's position and therefore of the moving (portable) object. This technology is based on the Direction-Finding signal processing methodology. It has much more accuracy compared to solutions that are based on RSSI (Received Signal Strength Indication). However, it implies very high costs during the installation phase with complicated configuration and tuning of the receivers.

Additionally, the Bluetooth technology cannot penetrate wide obstacles. In some indoor environments as some supermarkets, the distance between the roof and the floor is very high (more than 10 meters in most of the cases) and this makes the Bluetooth technology unusable, because the most common kind of Bluetooth devices operates up to 10 meters.

Moreover, the Bluetooth's communication is only mono-directional: the tag sends data to the receivers, but no vice-versa. This doesn't allow eventual reconfiguration of the tag, or any other needed resynchronization with the receiver.

The UWB (Ultra WideBand) technology is a wireless technology that uses a wide frequency spectrum and is used to position and track objects in real time. To be tracked, the object is equipped with a tag that sends out a UWB signal to receivers for its localization. The receivers use UWB signals to synchronize among themselves. Lastly, the data gathered by the receivers are sent to a server for calculating the precise position of the tagged object, mostly via Ethernet cables, but also wirelessly via Wi-Fi.

The UWB technology has several advantages for building wireless real-time location systems. The technology has low power consumption, high reliability and can penetrate obstacles. However, the UWB technology is very expensive and brings the same problems of the BLE (Bluetooth Low Energy) technology during the installation phase with complicated configuration and tuning of the receivers. Moreover, the UWB's communication is only mono-directional: the tag sends data to the receivers but no vice-versa. This doesn't allow eventual reconfiguration of the tag, or any other needed resynchronization with the UWB receiver.

CCTV camera systems need the installation of multiple cameras in the supermarket and a software running algorithms of artificial intelligence for object recognition and tracking. Despite the progresses on the artificial intelligence of the last years, such algorithms can generate errors, especially when the indoor environment is very crowed or when a moving object is occluded by another moving object.

**Short disclosure of the invention**

An aim of the present invention is the provision of a device and/or a method for indoor positioning of a moving object that overcomes at least some of the shortcomings and limitations of the state of the art.

Another aim of the invention is a device and/or a method for indoor positioning of a moving object which does not require the installation of any receiver on (the roof of) the indoor environment.

Another aim of the invention is a device and/or a method for indoor positioning of a moving object which is less expensive than known solutions.

Another aim of the invention is a device and/or a method for indoor positioning of a moving object which does not require (difficult) configurations and/or tuning, in order to work properly.

Another aim of the invention is a device and/or a method for indoor positioning of a moving object which does not require any satellite.

Another aim of the invention is a device and/or a method for indoor positioning of a moving object which does not suffer of (frequent) errors.

Another aim of the invention is a device and/or a method for indoor positioning of a moving object which does not require expensive and/or heavy processing unit.

According to the invention, these aims are attained by the object of the attached claims, and especially by a device for indoor positioning of a moving object according to claim 1, and by a method for indoor positioning of a moving object according to claim 14, wherein dependent claims deal with alternative and preferred embodiments of the invention.

The device for indoor positioning of a moving object according to the invention comprises an electronic module.

According to the invention, the electronic module comprises an optical flow sensor, which is arranged to take image frames and to compute a distance moved between two image frames taken at two different times.

In this context, an "optical flow sensor" is a sensor arranged to take image frames and to compute a distance moved between two image frames taken at two different times. In other words, it is a vision sensor arranged to measure an optical flow (or a visual motion) by image pixels counting, and arranged for outputting a displacement measurement based on this image pixels counting. Sequences of ordered images allow the estimation of motion as either discrete image displacements or instantaneous image velocities. In one preferred embodiment, the frames taken by the optical flow sensor are not saved by the device according to the invention.

According to the invention, the electronic module comprises also an inertial measurement unit, which is arranged to take inertial measurements and to compute a bearing angle on the basis of those inertial measurements.

In this context, a "bearing angle" is an angle measured (e.g. clockwise) from a reference direction, preferably from the (terrestrial) North direction.

According to the invention, the electronic module comprises also a processing unit, arranged to compute coordinates of the moving object on the basis of the distance (as computed by the optical flow sensor) and of the bearing angle (as computed by inertial measurement unit).

With respect to what is known in the art, the invention provides the advantage that it does not require the installation of any receiver on (the roof of) the indoor environment. The full logic for the calculation of the (instantaneous) coordinates of the moving object is fully in the electronic module of the device according to the invention, installed on the moving object.

In other words, no receiver is needed to detect the presence of the device according to the invention, and then to discern its positioning. This avoids the very high costs of the receiver(s) and the difficult configurations and tuning of them in order to work properly.

The device according to the invention doesn't need any satellite either. Therefore it's suitable both for outdoor and indoor scenarios.

The device according to the invention doesn't suffer of the presence of the obstacles, because it doesn't need to reach any receivers.

In one preferred embodiment, the device according to the invention comprises a fixing module, so as to be fixed to the moving object. In another embodiment, the device according to the invention is integrated in the moving object, as a part of the moving object, without the need of a fixing module.

In one preferred embodiment the electronic module of the device according to the invention doesn't save any observed frame taken by the optical flow sensor: in this case, there's no usage of any algorithm neither of motion tracking nor object recognition and re-identification, which all suffer of frequent errors, and which require very expensive and heavy processing unit.

In one preferred embodiment, the coordinates computed by the device according to the invention comprise at least the latitude and longitude of the moving object.

In one preferred embodiment, the inertial measurement unit of the device according to the invention comprises a magnetometer, e.g. a 2-axis magnetometer or a 3-axis magnetometer.

In one preferred embodiment, the inertial measurement unit of the device according to the invention comprises an accelerometer, e.g. a 3-axis accelerometer.

If the inertial measurement unit comprises a magnetometer and an accelerometer, then the inertial measurement unit is arranged to compute a tilt compensated bearing angle on the basis of the taken inertial measurements. In other words, if the inertial measurement unit comprises a magnetometer and an accelerometer, then the inertial measurement unit is used as a tilted compensated compass. This is important when the (indoor) environment comprises slopes and/or in the case in which the moving object can be tilted by the user, e.g. when the moving object is a shopping basket.

In one preferred embodiment, the inertial measurement unit of the device according to the invention comprises a gyrometer (or gyroscope), e.g. a 3-axis gyrometer. Data from a gyrometer are taken into account by the inertial measurement unit for filtering out possible computation errors.

In one preferred embodiment, the device according to the invention comprises a barometer, in order to measure air pressure in an (indoor) environment so as to detect a possible vertical movement. This is especially important for detecting the change of the floor of the moving object in a supermarket, for example, or in any other building comprising different floors.

In one preferred embodiment, the device according to the invention comprises a memory for storing the coordinates of the moving object.

In one preferred embodiment, the device according to the invention comprises a communication unit, e.g. a WiFi unit, in order to send (periodically or in real-time) the coordinates to a (remote dedicated) server or to another device.

If the device according to the invention is devoid of a communication unit, then the computed coordinates can be stored in the memory of the device and can be extracted by a (specialized) person, connecting to (a port of) the device an extraction tool, for example a USB tool, and transferring the coordinates from the memory of the device to the extraction tool. This operation can be periodically repeated. Examples of a USB tool comprise a USB pen drive or a USB cable connecting an external device like a workstation to the device according to the invention.

In one preferred embodiment, the inertial measurement unit of the device according to the invention is a 9 DoF (Degrees of Freedom) inertial measurement unit, arranged to compute also a pitch and a roll of the device according to the invention and apply corrections to the distance moved between two image frames as computed by the optical flow sensor. An inertial measurement unit comprising a 3-axis magnetometer, a 3-axis accelerometer and a 3-axis gyrometer is an example of a 9DoF inertial measurement unit.

The present invention concerns also a system for indoor positioning of a moving object comprising the device according to the invention and the moving object, wherein the device is fixed to the moving object so that the distance from the device to a reference surface (e.g. the floor of an indoor environment) allows a camera of the optical flow sensor to focus the reference surface.

In one embodiment, this distance is equal of higher than 8 cm.

In one embodiment, the moving object is a cart, a shopping cart, a basket, a shopping basket, a bag, a trolley, a baggage cart, a suitcase, a skateboard, a skate, a scooter, a pushchair, or a wheelchair.

The present invention concerns also a method for indoor positioning of a moving portable object, as a shopping cart or a shopping basket, by using the device according to the invention, comprising the steps of:

- computing a distance moved between two image frames taken at two different times by the optical flow sensor,
- computing a bearing angle on the basis of inertial measurements taken by the inertial measurement unit,
- computing coordinates of the moving object on the basis of this distance and of this bearing angle by a processing unit.

In one preferred embodiment, the method comprises the step of - sending the computed coordinates via a communication unit to an external device or to a remote server.

In one preferred embodiment, the method comprises the step of - extracting the stored computed coordinates via an extraction tool, like a USB tool.

**Short description of the drawings**

Exemplar embodiments of the invention are disclosed in the description and illustrated by the drawings in which:

Figure 1 illustrates schematically a device for indoor positioning of a moving object according to an embodiment of the invention.

Figure 2 illustrates schematically some steps of a method for indoor positioning of a moving object according to an embodiment of the invention.

Figure 3 illustrates a perspective view of a system for indoor positioning of a moving object according to embodiment of the invention, wherein the moving object is a shopping cart.

Figure 4 illustrates a frontal view of a system for indoor positioning of a moving object according to embodiment of the invention, wherein the moving object is a shopping basket.

Figure 5 illustrates a frontal view of a system of Figure 4, wherein the shopping basket is tilted with regard to a reference surface (the floor in this case).

Figure 6A illustrates a frontal view of a device for indoor positioning of a moving object according to embodiment of the invention and of an element (a flower) fixed with regard to the device, and Figure 6B illustrates a frontal view of the device of Figure 6A with a different orientation.

Figure 7 illustrates a top view of an indoor environment and of a possible path of the moving object as tracked by the device according to the invention.

Figure 8 illustrates a perspective view of the a device for indoor positioning of a moving object according to embodiment of the invention.

**Examples of embodiments of the present invention**

In the following, reference will be made to a shopping cart or a shopping basket as examples of moving objects. Although those are preferable applications of the device according to the invention, it should be noted that they are not limitative and that the device according to the invention can also be used with other moving objects, for example and in a not-limiting way a bag, a trolley, a baggage cart, a suitcase, a skateboard, a skate, a scooter, a pushchair, a wheelchair, etc.

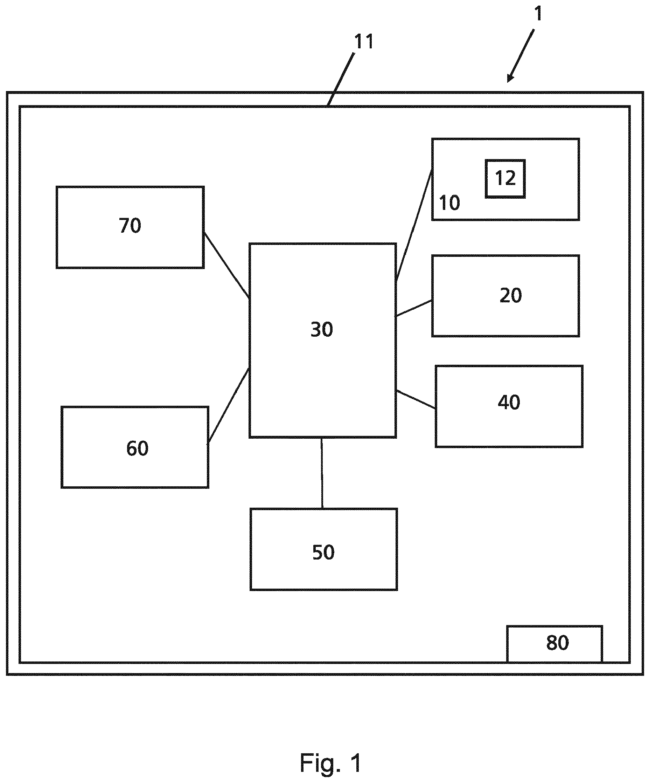

Figure 1 illustrates schematically a device 1 for indoor positioning of a moving object according to an embodiment of the invention.

In one preferred embodiment, the device 1 according to the invention comprises a fixing module (not illustrated), so as to be fixed to the moving object. The fixation can be movable or not movable. Examples of a fixing module comprise glue, adhesive, screws, rivets, magnets, etc.

In another embodiment, the device 1 according to the invention is integrated in the moving object 2, as a part of the moving object, without the need of a fixing module. For example, if the moving object 2 is a shopping cart, the device 1 can be integrated within the rod between two (frontal) wheels of a shopping cart, or in an electrical module of the shopping cart or in any other part of the shopping cart.

According to the invention, the device 1 comprises an electronic module 11, comprising an optical flow sensor 10, which is arranged to take image frames and to compute a distance moved between two image frames taken at two different times. In the embodiment of Figure 1, the optical flow sensor 10 comprises a camera 12. In one embodiment, the camera is arranged to take more than 100 frames per second, e.g. 120 frames per second.

According to the invention, the electronic module comprises also an inertial measurement unit 20, which is arranged to take inertial measurements and to compute a bearing angle on the basis of those inertial measurements.

According to the invention, the electronic module comprises also a processing unit 30, arranged to compute coordinates of the moving object on the basis of the distance (as computed by the optical flow sensor 10) and of the bearing angle (as computed by inertial measurement unit 20).

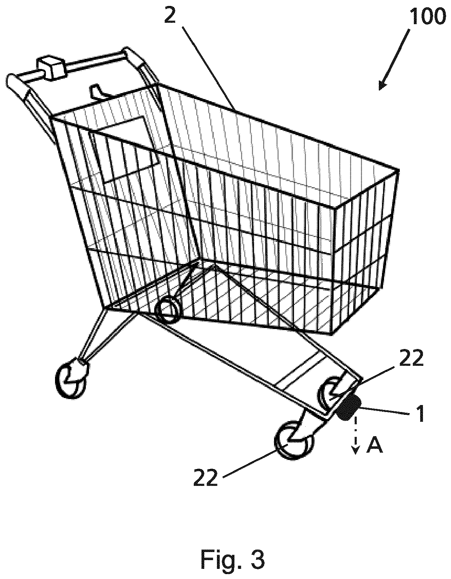

The device 1 according to the invention then combines in an electronic module 11 an optical flow sensor 10 and an IMU (Inertial Measurement Unit) 20, which can comprise a (3-axis) magnetometer, used as a compass, and to install it on a moving object, e.g. on a shopping cart 2, as visible for example in Figure 3. Figure 3 illustrates a perspective view of a system 100 for indoor positioning of a moving object 2 according to embodiment of the invention, wherein the moving object 2 is a shopping cart.

If the IMU 20 comprises a (3-axis) magnetometer and a (3-axis) accelerometer, then it is used as a tilt compensated compass. This is important when the (indoor) environment comprises slopes and/or in the case in which the moving object can be tilted by the user, e.g. when the moving object is a shopping basket.

The IMU 20 can comprises also a (3-axis)-gyrometer. The data from a gyrometer are taken into account by the IMU 20 for filtering out possible computation errors.

In an indoor environment where there are absolutely no zones with inclination, it is sufficient to have an inertial measurement unit 20 comprising only 2-axis magnetometer, that is even cheap.

In one preferred embodiment, the device 1 according to the invention is installed on the moving object 2, at a height from a reference surface (the flow in the example of Figure 3), so that the camera 12 of the optical flow sensor 10 points and focus the reference surface, as indicated by the arrow A.

The optical flow sensor 10 is then able to detect the deltas of the movements horizontally and vertically. Those movements are combined with the one received from the IMU 20 as (tilt compensated) compass, so as to provide precise information to track the moving object 2 (the shopping cart in Figure 3). In one preferred embodiment, the coordinates of the moving object 2 are computed in real time or at each instant.

The IMU 20 should work as a tilt compensated compass in an indoor environment where there are zones with inclination. In such situation, without the tilt compensation, the result produced by the IMU 20 as digital compass will be affected by error. In such a case, the IMU 20 comprises not only a (2-axis) magnetometer, but also (3-axis) accelerometer, so as to compute more degrees-of-freedom, e.g. 9-degrees-of-freedom. This embodiment is useful when the moving object 2 is inclined, for example when a user inclines it or brings it on an escalator. In this case, without the tilt compensation, the result produced by the IMU 20 as (digital) compass will be affected by error.

For improving the accuracy of the data from the (3-axis) accelerometer, which can be noisy, the IMU 20 can comprise also a (3-axis) gyroscope which offers angular velocities around the (three) axes. Moreover, its signals are not susceptible to external forces. Therefore, the use of a (3-axis) gyroscope and (3-axis) accelerometer (which are mutually orthogonal), combined with a (3-axis) magnetometer, provides an accurate tilt compensation.

In one embodiment, the IMU 20 comprises also a Kalman filter that uses the data from the gyroscope, the accelerometer and the magnetometer so as to further improve the tilt compensation.

In this context, an optical flow sensor 10 is a vision sensor capable of measuring optical flow or visual motion and arranged for outputting a displacement measurement based on optical flow (image pixels counts). Sequences of ordered images allow the estimation of motion, as either discrete image displacements or instantaneous image velocities.

In one preferred embodiment, the optical flow sensor 10 is arranged to compute the motion between two image frames which are taken by its camera 12 at times t and t+Δt (for example Δt = 5 milliseconds), i.e. by computing a distance moved in pixels by evaluating a difference (or differencies) between two images (the first image frame taken at the time t, and the second image frame taken at the time t+Δt), by assuming the conservation of voxels and/or image pixels in the two images.

A mouse of a Personal Computer comprises in general an optical flow sensor, which points to the surface supporting the mouse (i.e. which points down). At each horizontal or vertical movement, the optical flow sensor detects how many pixel the mouse did move horizontally and vertically. Such information is then sent from the internal logic module of the mouse to the Personal Computer that consequently shows the mouse pointer moving on its screen.

The optical flow sensor 10 of the device according to the invention understands in a similar way the movements of the moving object 2 just simply observing how the floor (or in general a reference surface, as also a lateral wall or the roof) scrolls underneath (respectively with regard to) itself.

The information provided by the optical flow sensor 10 is correlated by the processing module 30 to the information provided by the IMU 20.

The IMU 20 of the device 1 according to the invention is a (digital) (tilt compensated) compass of the electronic module 11.

The optical flow sensor 10 carries out the pixel increments from one time step to another in the form of moved distances relative to two different axes, preferably relative to two perpendicular axes, e.g. moved distances ΔX, ΔY relative to the axis X respectively to the axis Y.

In the embodiment of Figure 3, the device 1 according to the invention is fixed or installed on the shopping cart 2 at fixed height from the ground.

Assuming that such fixed height is the "altitude", the optical flow sensor 10 can then calculate the distance moved between two image frames taken at two different times, e.g. at two consecutive times, with the following formula (1):

$$distance\ moved = \left(\frac{sensor\ value \times altitude}{sensor's\ resolution\ \times scaler}\right) \times 2.0 \times tan\left(\frac{field\ of\ view}{2.0}\right) \qquad (1)$$

wherein

- *distance moved* is distance moved between two image frames taken at two different times by the optical flow sensor, in the same unit measure of *altitude* (in meters, for example); the *distance moved* is the distance ΔX and/or ΔY in the same unit measure of "altitude" (in meters, for example) moved along the direction of the axis X respectively of the axis Y
- *sensor value* is the ΔX' and/or ΔY' in pixels, moved along the direction of the axis X respectively of the axis Y, provided by the optical flow sensor
- *sensor's resolution* is the resolution of the optical flow sensor 10 in pixels,
- *altitude* is the (fixed) distance (height) (in meters for example), of the device 1 to a reference surface of the indoor environment, e.g. the floor
- *scaler* is the value returned when sensor is moved equivalent of one pixel
- *field of view* is the field of view of the camera of the optical flow sensor 10.

In one preferred embodiment, the IMU 20 of the device 1 according to the invention is used as a tilt compensated compass and constantly provides the bearing angle θ in reference to the terrestrial North. In this case, the IMU 20 of the device 1 comprises a 3-axis magnetometer, a 3-axis accelerometer and a 3 axis-gyrometer.

The processing unit 30 of the device 1 according to the invention receives the distance moved from the optical flow sensor 10 and the bearing angle θ from the IMU 20 at each instant.

Then, the processing unit 30 computes on the basis of this information the coordinates of the device 1, and then of the moving object 2 on which the device 1 is installed, since the device 1 is fixed relative to the moving object 2 and that the distance between the device 1 and the moving object 2 is known or measurable. In another embodiment, it is considered that the coordinates of the device 1 corresponds to the coordinates of the moving object 2.

In one preferred embodiment, the processing unit 30 computes the latitude and longitude of the device 1.

In one preferred embodiment, the processing unit 30 computes a second value of latitude la2 and a second value of longitude lo2 of the device 1, by knowing a first value of latitude la1, a first value of longitude lo1 of the device 1, the bearing angle and the distance moved from the first point (having as coordinates la1, lo1) to the second point (having as coordinates la2, lo2) with the following formulas:

$$la2 = asin\big(sin(la1) \times cos(Ad) + cos(la1) \times sin(Ad) \times cos(\theta)\big) \qquad (2)$$

$$lo2 = lo1 + atan2\big(sin(\theta) \times sin(Ad) \times cos(la1), cos(Ad) - sin(la1) \times sin(la2)\big) \qquad (3)$$

wherein:

- $la1$ is the latitude of a first point (initially it can be set to zero)
- $lo1$ is the longitude of a first point (initially it can be set to zero)
- $d$ is the distance moved (as obtained from the optical flow sensor)
- $Ad$ is the angular distance, wherein $Ad = d/R$ wherein $R$ is a radius of the Earth
- $\theta$ is the bearing angle as obtained from the IMU 20.

The device 1 according to the invention can be installed on the shopping cart, for example between the two front wheels 22 as illustrated in Figure 3, at a distance from a reference surface (the floor in the case of Figure 3) that allows the camera of the optical flow sensor 10 to focus the reference surface. In one preferred embodiment, this distance is equal or higher than 8 cm from the reference surface, e.g. 10 cm.

It is then possible to track the 3D positioning of the shopping cart 2 without the problems of all the other technologies, assuming that the initial position is at latitude 0 and longitude 0. The initial latitude and the initial longitude can be configured by the user. The altitude is then fixed and the latitude and the longitude are computed by the processing unit 30.

In one embodiment, the computed coordinates can be stored in a local memory 60 of the device 1 and regularly extracted by a technician, e.g. via a (USB) port 80. In another embodiment, the computed coordinates can be transmitted to another device or to a (remote) service by a communication unit 40.

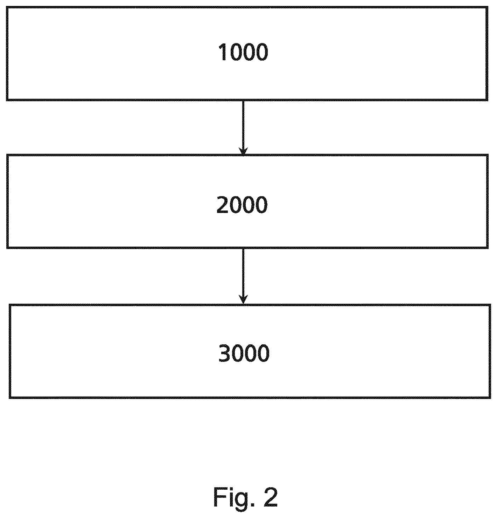

Figure 2 illustrates schematically some steps of a method performed by the device 1 for indoor positioning of a moving object according to embodiment of the invention. In the first step 1000, the optical flow sensor 10 computes a moved distance ΔX, ΔY between two image frames which are taken by the camera 12 at times t and t+Δt and the IMU 20 computes a bearing angle θ, preferably at time t+Δt. Those two calculations are independent and can be performed simultaneously or in two different temporal instants. In one preferred embodiment the two different temporal instants are very closed to each other, so as to improve the accuracy of the calculations.

In a second step 2000, the processing unit 30 computes a latitude and a longitude of the device 1 on the basis of the moved distance ΔX, ΔY and of the bearing angle θ.

In an optional step 3000, the device 1 sends (periodically or in real-time) the computed coordinates to another device, or to a (remote) server via the communication unit 40, e.g. a WiFi unit.

In one embodiment, the device 1 comprises a barometer 50 in order to measure air pressure in a certain indoor environment. With this addition, the moving object 2 (e.g. the shopping cart) can be tracked even if it goes to the second, third, etc.., floor using e.g. a lift or escalator.

In one embodiment, the device 1 is autonomous and comprises an internally power supply 70, e.g. a battery, e.g. a Li-Ion or a Li-Polymer battery, e.g. rechargeable via the USB port 80.

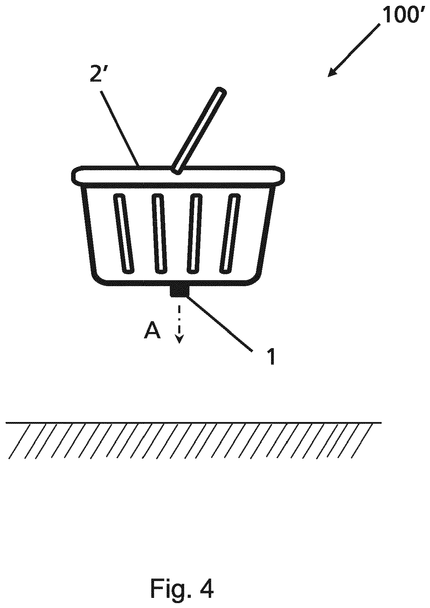

Figure 4 illustrates a frontal view of a system 100' for indoor positioning of a moving object 2' according to embodiment of the invention, wherein the moving object is a shopping basket.

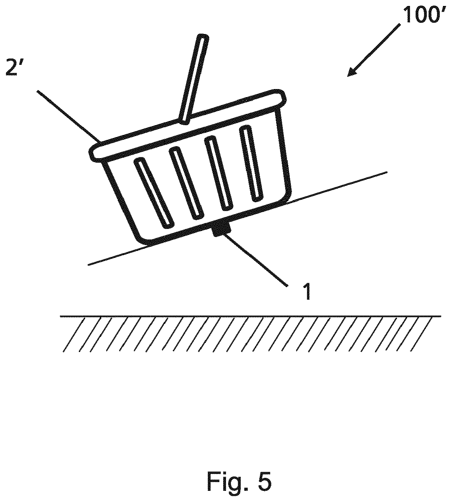

In this embodiment, the optical flow sensor has a camera looking at a reference surface, e.g. the floor, as indicated by the arrow A. In this embodiment, some corrections are due to the fact that the shopping basket usually changes its roll $\phi$' and pitch $\theta$' just because the person is handling the shopping basket with his/her hands or arms and he/her walks (this does not happen e.g. in the case of a shopping cart), as illustrated e.g. in Figure 5. It is assumed that in this case the heading $\varphi$' does not change.

Change in the shopping basket's roll $\phi$' and pitch $\theta$' will also cause changes in the X and Y values computed by the optical flow sensor 10.

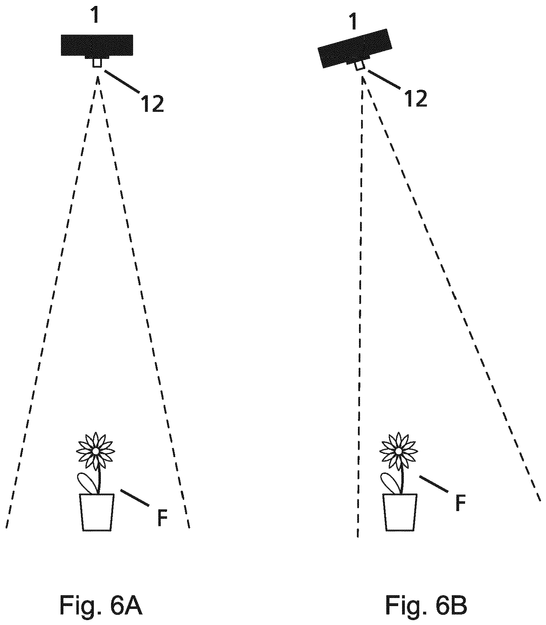

Figure 6A illustrates a frontal view of a device 1 for indoor positioning of a moving object according to embodiment of the invention and of an element (a flower) F fixed with regard to the device, and Figure 6B illustrates a frontal view of the device of Figure 6A with a different orientation.

The camera 12 of the optical flow sensor of the device 1 has rolled about 10 degrees from Figure 6A to Figure 6B, but also the fixed flower F has moved from the centre of the camera's view in the Figure 6A to the edge of the view in the Figure 6B, even if, in the reality, the flower F did not move at all.

The expected change in sensor values can be calculated directly from the change in roll $\phi$' and pitch $\theta$' given the two formulas below.

$$expectedXvalue = \left( \frac{changeroll\Phi' \times sensor resolution \times scaler}{field of view} \right) \qquad (4)$$

$$expectedYvalue = \left( \frac{changepitch\theta' \times sensor resolution \times scaler}{field of view} \right) \qquad (5)$$

wherein

expectedXvalue is the difference along the X axis that must be corrected due to a change of the roll $\phi$',
expectedYvalue is the difference along the Y axis that must be corrected due to a change of the pitch $\theta$',
changeroll is the change of the roll $\phi$' as measured by the IMU 20, changepitch is the change of the pitch$\theta$' as measured by the IMU 20,
sensor's resolution is the resolution in pixel of the optical flow sensor 10, scaler is the value returned when sensor is moved equivalent of one pixel, field of view is the field of view of the camera of the optical flow sensor 10.

Then, the expected changes must be subtracted from the real values returned by the optical flow sensor 10 of the device 1, before the computing of the coordinates by the processing unit 30.

Additionally, not all the people have always the same height, therefore in such cases the variable "altitude" seen before (fixed as the height from the floor where the electronic module is installed) must be interpreted as a "fair" constant value, like for example 70 cm (this introduces errors but are negligible).

If the moving object can be tilted by the user, as for example in the case of a shopping basket, a 9 DoF IMU 20 allows to have always the pitch $\theta$' and roll $\phi$' of the device 1 and apply the corrections, if necessary.

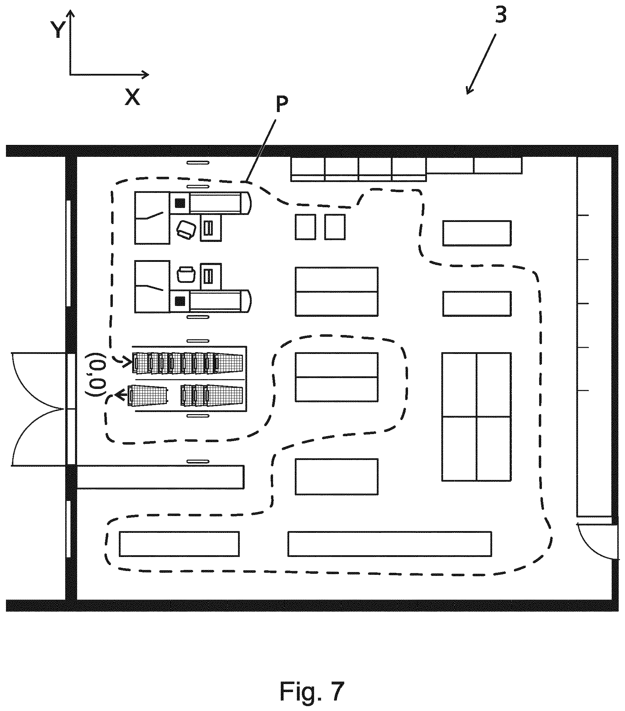

Figure 7 illustrates a top view of an indoor environment 3 (as a supermarket) and of a possible path P of the moving object as tracked by the device according to the invention, starting from an initial position (0, 0).

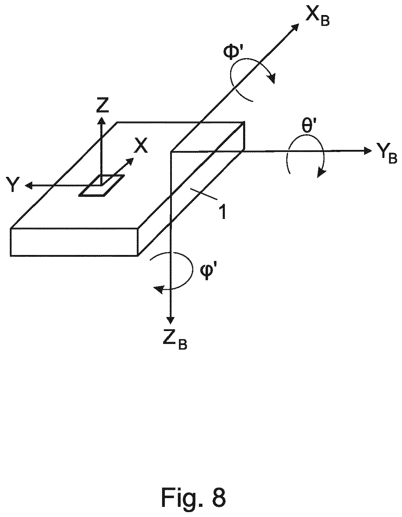

Figure 8 illustrates a perspective view of the a device 1 for indoor positioning of a moving object according to embodiment of the invention, wherein the roll $\phi$', the pitch $\theta$' and the heading $\varphi$' are indicated, as long as the orthogonal Cartesian axes of reference X, Y and Z.

**Reference numbers or signs used in the Figures**

| | |
|---|---|
| 1 | Device |
| 2, 2' | Moving object |
| 3 | Indoor environment |
| 10 | Optical flow sensor |
| 11 | Electronic module |
| 12 | Camera |
| 22 | Wheel |
| 20 | Inertial measurement unit |
| 30 | Processing unit |

| 40 | Communication unit |
| 50 | Barometer |
| 60 | Memory |
| 70 | Power supply |
| 80 | Port |
| 100, 100' | System |
| 1000 | First step |
| 2000 | Second step |
| 3000 | Third step |
| A | Arrow |
| F | Fixed element |
| P | Tracked path |
| $\phi'$ | Roll |
| $\theta'$ | Pitch |
| $\varphi'$ | Heading |
| X, Y, Z | Orthogonal (positive) axes |
| $X_B$, $Y_B$, $Z_B$ | Orthogonal (negative) axes |

**Claims**

1. Device (1) for indoor positioning of a moving object (2, 2'), as a shopping cart (2) or a shopping basket (2'), comprising:

   - an electronic module (11) comprising:

     - an optical flow sensor (10), arranged to take image frames and to compute a distance moved between two image frames taken at two different times,
     - an inertial measurement unit (20), arranged to take inertial measurements and to compute a bearing angle ($\theta$) on the basis of said inertial measurements,
     - a processing unit (30), arranged to compute coordinates of the moving object on the basis of said distance and of said bearing angle ($\theta$).

2. The device (1) of claim 1, wherein the optical flow sensor (10) is arranged to compute a distance in pixels by evaluating a difference between said two image frames, by assuming the conservation of voxels and/or image pixels in the two image frames.

3. The device (1) of one of claims 1 or 2, wherein said coordinates comprise at least the latitude and longitude of the moving object (2, 2').

4. The device (1) of one of claims 1 to 3, wherein said inertial measurement unit (20) comprises a magnetometer, e.g. a 2-axis magnetometer or a 3-axis magnetometer.

5. The device (1) of one of claims 1 to 4, wherein said inertial measurement unit (20) comprises an accelerometer, e.g. a 2-axis accelerometer or a 3-axis accelerometer, so that the computed bearing angle is a tilt compensated bearing angle.

6. The device (1) of one of claims 1 to 5, wherein said inertial measurement unit (20) comprises a gyrometer, e.g. a 3-axis gyrometer, so as to improve the accuracy of the bearing angle.

7. The device (1) of one of claims 1 to 6, comprising a barometer (50) in order to measure air pressure in an environment so as to detect a possible vertical movement of said moving object (2, 2').

8. The device (1) of one of claims 1 to 7, comprising a memory (60) for storing the computed coordinates of the moving object (2, 2').

9. The device (1) of one of claims 1 to 8, comprising a communication unit (40), in order to send the computed coordinates to an external device or to a server.

10. The device (1) of one of claims 1 to 9, wherein the inertial measurement unit (20) is a nine degrees-of-freedom inertial measurement unit (20), arranged to compute also a pitch ($\theta$') and a roll ($\phi$') of the device (1) and apply corrections to the distance moved between two image frames as computed by the optical flow sensor (10).

11. The device (1) of one of claims 1 to 10, comprising a fixing module so as to be fixed to the moving object (2, 2').

12. System (100, 100') for indoor positioning of a moving portable object (2, 2'), comprising:

    - the device of one of claims 1 to 11,
    - a moving object (2, 2')

    wherein the device (1) is fixed to the moving object so that the distance from the device (1) to a reference surface allows a camera (12) of the optical flow sensor (10) to focus the reference surface.

13. The system (100, 100') of one of claims 11 or 12, wherein the moving object is as a cart, a shopping cart, a basket, a shopping basket, a bag, a trolley, a baggage cart, a suitcase, a skateboard, a skate, a scooter, a pushchair or a wheelchair.

14. Method for indoor positioning of a moving object (2, 2'), as a shopping cart (2) or a shopping basket (2'), by using the device of one of claims 1 to 11, comprising the steps of:

    - computing a distance moved between two image frames taken at two different times by said optical flow sensor (10),
    - computing a bearing angle ($\theta$) on the basis of inertial measurements taken by said inertial measurement unit (20),
    - computing coordinates of the moving object (2, 2') on the basis of said distance and of said bearing angle ($\theta$) by a processing unit.

15. The method of claim 14, comprising the step of

    - sending the computed coordinates via a communication unit (40) to an external device or to a server.

Fig. 1

Fig. 2

Fig. 3

100'

2'

A

1

Fig. 4

Fig. 5

EP 4 009 000 A1

Fig. 6A

Fig. 6B

16

Fig. 7

Fig. 8

Europäisches Patentamt
European Patent Office
Office européen des brevets

# EUROPEAN SEARCH REPORT

Application Number

EP 20 21 1814

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/077514 A1 (CERTUSVIEW TECHNOLOGIES LLC [US]) 28 May 2015 (2015-05-28) <br> * paragraphs [0034], [0097], [0098], [0138], [0120], [0149] - [0151], [0153], [0211], [0216], [0239], [0279] * <br> * figures 4A, 4B * <br> ----- | 1-15 | INV. <br> G01C21/16 <br> G01C21/20 <br> G06T7/20 |
| X | US 2013/002854 A1 (NIELSEN STEVEN [US] ET AL) 3 January 2013 (2013-01-03) <br><br> * paragraphs [0027], [0028], [0116], [0119], [0120], [0132], [0148], [0150], [0151], [0153], [0211] * <br> * figures 4A, 4B * <br> ----- | 1-6, 8-12,14, 15 | |
| A | CN 107 831 776 A (HUNAN UPIXELS TECH CO LTD) 23 March 2018 (2018-03-23) <br> * paragraphs [0011] - [0012] * <br> ----- | 10 | |

TECHNICAL FIELDS SEARCHED (IPC)

G01C
G06T

The present search report has been drawn up for all claims

| Place of search | Date of completion of the search | Examiner |
|---|---|---|
| The Hague | 12 April 2021 | Nikoli, Revekka |

EPO FORM 1503 03.82 (P04C01)

**ANNEX TO THE EUROPEAN SEARCH REPORT
ON EUROPEAN PATENT APPLICATION NO.**

EP 20 21 1814

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2021

| Patent document cited in search report | Publication date | Patent family member(s) | Publication date |
|---|---|---|---|
| WO 2015077514 A1 | 28-05-2015 | US 2017102467 A1<br>WO 2015077514 A1 | 13-04-2017<br>28-05-2015 |
| US 2013002854 A1 | 03-01-2013 | NONE | |
| CN 107831776 A | 23-03-2018 | NONE | |

EPO FORM P0459

For more details about this annex : see Official Journal of the European Patent Office, No. 12/82